# EUROPEAN PATENT SPECIFICATION

(11) **EP 1 375 966 B1**
(45) Date of publication and mention of the grant of the patent: **14.05.2008**
(21) Application number: 03014648.4
(22) Date of filing: 26.06.2003
(51) Int. Cl.: F16H 25/22

(54) **Ball screw device and method of manufacturing the same**
Kugelgewindespindel und Herstellungsverfahren dafür
Dispositif d'écrou et de vis à billes et méthode de fabrication dudit dispositif

(30) Priority: 26.06.2002 JP 2002186036
(43) Date of publication of application: 02.01.2004
(73) Proprietor: JTEKT CORPORATION, Chuo-ku, Osaka (JP)
(72) Inventor: Sugita, Sentaro, Chuo-ku, Osaka (JP)
(74) Representative: TBK-Patent

(56) References cited:
- GB-A- 593 210
- US-A- 3 306 124
- US-A1- 2002 003 059
- PATENT ABSTRACTS OF JAPAN vol. 2000, no. 01, 31 January 2000 (2000-01-31) & JP 11 270647 A (SHOWA CORP; HONDA MOTOR CO LTD), 5 October 1999 (1999-10-05)

## Description

### BACKGROUND OF THE INVENTION

This invention relates to a ball screw device, more particularly to a deflector-type ball screw mechanism according to the preamble portion of claim 1 and method of manufacturing such ball screw device. A device of this type is known from closest prior art document US 2002 0003059.

As one of ball screw devices that transforms rotational movement into linear movement and linear movement into rotational movement, a deflector-type ball screw device is known by Japanese Laid-Open Patent Application No. 11-270647, for example. Such conventional deflector-type ball screw device comprises a screw shaft that a thread groove is formed on an outer surface thereof, a nut that a thread groove is formed on an inner surface thereof, plural balls which exist between the thread grooves, and plural deflectors. A ball-roll path that the balls roll therein is provided by making the thread groove of the screw shaft be opposite to the thread groove of the nut. The deflector is attached into a through hole that is formed on the nut so as to penetrate it in radial direction. A concavity is formed on an inner surface of the deflector, so a ball-return path is provided by the deflector being attached. The balls can climb over a ridge of the thread groove of the screw shaft by going through the ball-return path. Therefore, the balls are circulated endlessly into the ball-roll path and the ball-return path. Since plural deflectors are generally used, ball-circulation paths, which mean pair of the ball-roll path and the ball-return path, of the same number as the deflector are provided respectively.

According to such ball screw device, when the nut is rotated, rotational force of the nut is smoothly transformed into force that moves the screw shaft in its axial direction by the balls being circulated endlessly through the ball-circulation path with receiving load. As a result, the screw shaft is moved in its axial direction. Similarly, when the screw shaft is rotated, the nut is moved in its axial direction, and when one of the screw shaft and the nut is moved in its axial direction, the other is rotated.

At conventional processes for manufacturing the deflector-type ball screw device, the thread groove of the nut is ground before the deflector is attached to the nut. After that, the deflector, which the concavity has been formed on, is attached into the through hole of the nut. Therefore, a step and a gap easily occur at a seam portion between the thread groove of the nut and the concavity of the deflector. Such step and gap prevent that the balls move smoothly, and cause operation failure of the ball screw device. Or, in order to remove such step, an extra process that finishes the seam portion between the thread groove and the deflector by manual operation is needed.

### SUMMARY OF THE INVENTION

In view of the foregoing, it is an object of the present invention to provide improved ball screw device and an improved manufacturing method of a ball screw device. This object is solved with a device according to claim 1 and a method according to claim 6 or 7. In order to achieve the above and other objects, a first aspect of the present invention provides a ball screw mechanism which comprises a nut, a screw shaft, a plural number of balls and a deflector. A first thread groove is formed on an inner surface of the nut. A second thread groove is formed on an outer surface of the screw shaft. The balls are arranged between the first thread groove and the second thread groove. The deflector is built into the nut to provide a ball-return path which returns the balls so as to circulate endlessly. The deflector comprises a particularly shaped deflector piece which defines a top plate of the ball-return path and a guide member which defines sidewalls of the ball-return path.

A second aspect of the present invention provides a manufacturing method of a ball screw device which comprises a nut, a screw shaft, a plural number of balls, and a deflector which comprises two pieces a deflector piece and a guide member. The manufacturing method comprises, in this order attaching the deflector piece to the nut, grinding an inner surface of the nut together with an inner surface of the deflector piece, attaching the guide member to the nut, and assembling the balls and the screw shaft to the nut.

A third aspect of the present invention provides a manufacturing method of a ball which comprises a nut, a screw shaft, a plural number of balls, and a deflector which comprises two pieces, a deflector piece and a guide member. The manufacturing method comprises in this order, attaching the deflector piece to the nut, grinding an inner surface of the nut together with an inner surface of the deflector piece, detaching the deflector piece from the nut, assembling the balls and the screw shaft to the nut, and attaching the deflector piece and the guide member to the nut.

### BRIEF DESCRIPTION OF THE DRAWINGS

Various other objects, features and many of the attendant advantages of the present invention will be readily appreciated as the same becomes better understood by reference to the following detailed description of the preferred embodiments when considered in connection with the accompanying drawings, in which:
Fig. 1 is a cross-sectional view of a ball screw device according to an embodiment of the present invention;
Fig. 2 is a development of a nut and a deflector of the ball screw device;
Fig. 3 is a plane view of a deflector piece of the deflector seeing in a direction shown by arrow III in Fig. 2;
Fig. 4 is a cross-sectional view of the deflector piece along IV-IV in Fig. 3;
Fig. 5 is plane view of a guide member of the deflector seeing in a direction shown by arrow V in Fig. 2;
Fig. 6 is a cross-sectional view of the guide member taking along VI-VI in Fig. 5;
Fig. 7 is a cross-sectional view showing the deflector and the nut;
Fig. 8 is a fragmentary cross-sectional view showing the deflector piece attached on the nut;
Fig. 9 is a fragmentary cross-sectional view showing the guide member attached on the nut;
Fig. 10 is a schematic view showing a modification of the embodiment to fix a deflector to a nut.

### DESCRIPTION OF THE PREFERRED EMBODIMENT

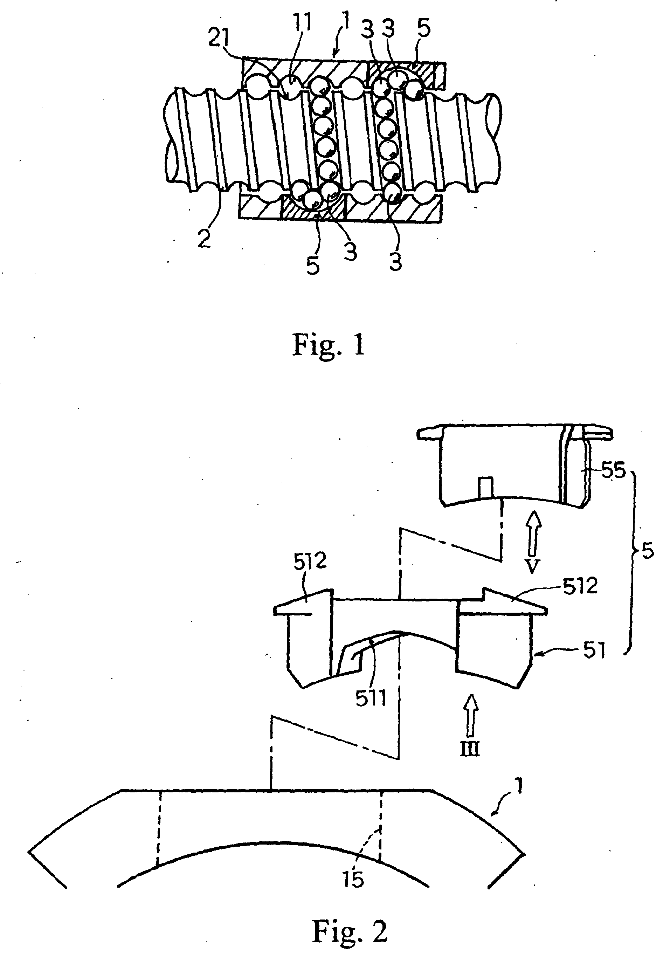

A ball screw device as an embodiment of the present invention will be described with reference to Figs. 1-9. The ball screw device comprises a nut 1, a screw shaft 2 that is moved for the nut 1 relatively, plural balls 3 made of steel and plural deflectors 5 as shown by Fig. 1. A first thread groove 11 is formed on an inner surface of the nut 1. A second thread groove 21 is formed on an outer surface of the screw shaft 2. Since dimensions of both thread grooves 11, 21 are the same, a spiral ball-roll path is provided by opposing the thread grooves 11,21 each other, in which the balls 3 exist and roll with receiving load. Each deflector 5 guides the balls 3 so as to climb over a ridge of the second thread groove 21 in order that the balls 3 endlessly circulate.

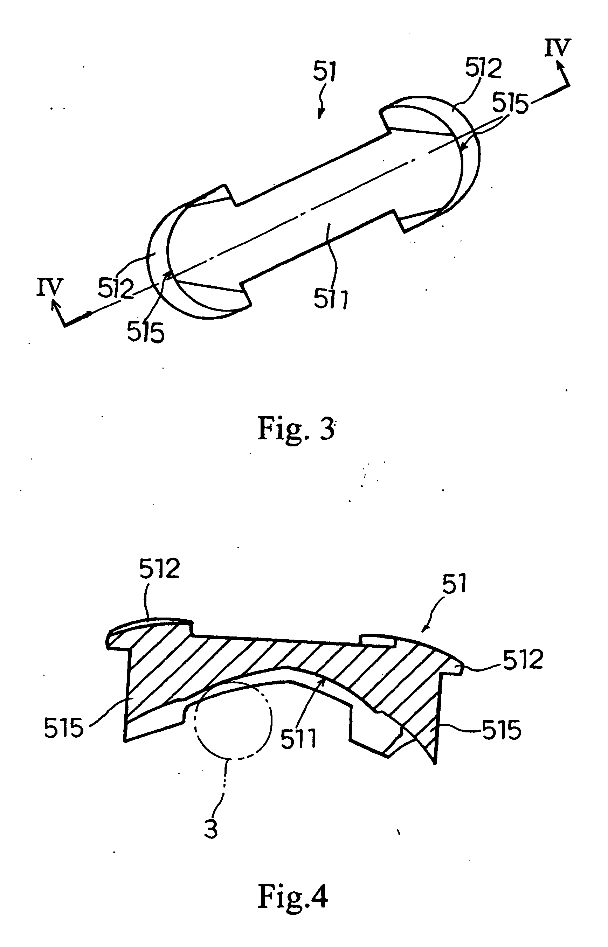

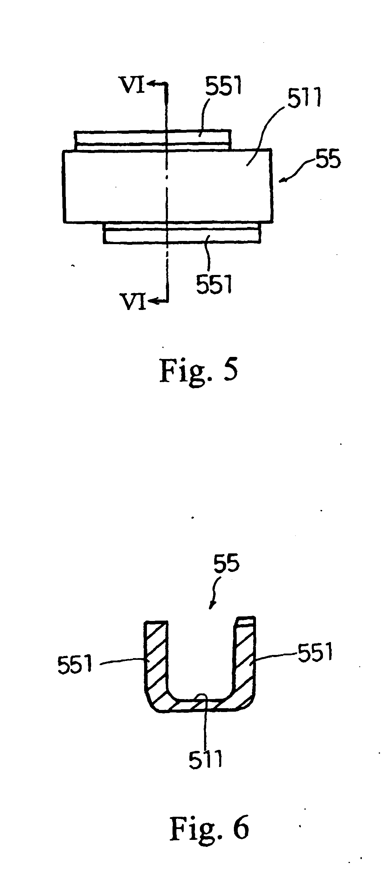

Each deflector 5 of the embodiment comprises two pieces that are a deflector piece 51 and a guide member 55. The deflector piece 51 is shaped like an arch as shown by Fig. 2 and Fig. 4. A concavity 511 is formed on an intermediate portion of the arch. Both prop portions 515 of the arch are fitted into a through hole 15 formed into the nut 1 so as to penetrate it in radial direction. A flange 512 is formed on each prop portion 515 in order to fix the deflector piece 51 to the nut 1. On the other hand, the guide member 55 is shaped so that its cross section is U-shape having both side portions 551 as shown by Fig. 2 and Fig. 6. A ball-return path is provided by the deflector piece 51 and the guide member 55 being fitted into the through hole 15 of the nut 1 so that both side portions 551 sandwich the intermediate portion of the deflector piece 51. That is, the concavity 511 defines a top plate of the ball-return path and, both side portions 551 of the guide member 55 define sidewalls of the ball-return path. Since the deflector piece 51 and the guide member 55 are attached to the nut 1 in a direction that crosses a leading direction of the thread grooves 11, 21, the balls 3 can climb over the ridge of the second thread groove 21 through the ball-return path. Therefore, the balls 3 circulate endlessly through the ball-roll path and the ball-return path according to relative movement between the nut 1 and the screw shaft 2. Although a couple of the deflectors 5 are shown by Fig. 1, more deflectors 5, for example four, are used and arranged at an equal interval in circumferential direction. That is, pairs of the ball-roll path and the ball-return path of the same number as the deflectors 5 are provided. In a case that the nut 1 is rotated, it is preferable that the deflectors 5 are arranged at the equal interval in circumferential direction, because the nut 1 is not unbalanced.

According to the aforementioned ball screw device, when the nut 1 is rotated by a motor (not shown), rotational force of the nut 1 is smoothly transformed into force that moves the screw shaft 2 in its axial direction by the balls 3 being circulated endlessly through the ball-roll path and the ball-return path with receiving load. As a result, the screw shaft 2 is moved in its axial direction. Similarly, when the screw shaft 2 is rotated, the nut 1 is moved in its axial direction, and when one of the nut 1 and the screw shaft 2 is moved in its axial direction, the other is rotated.

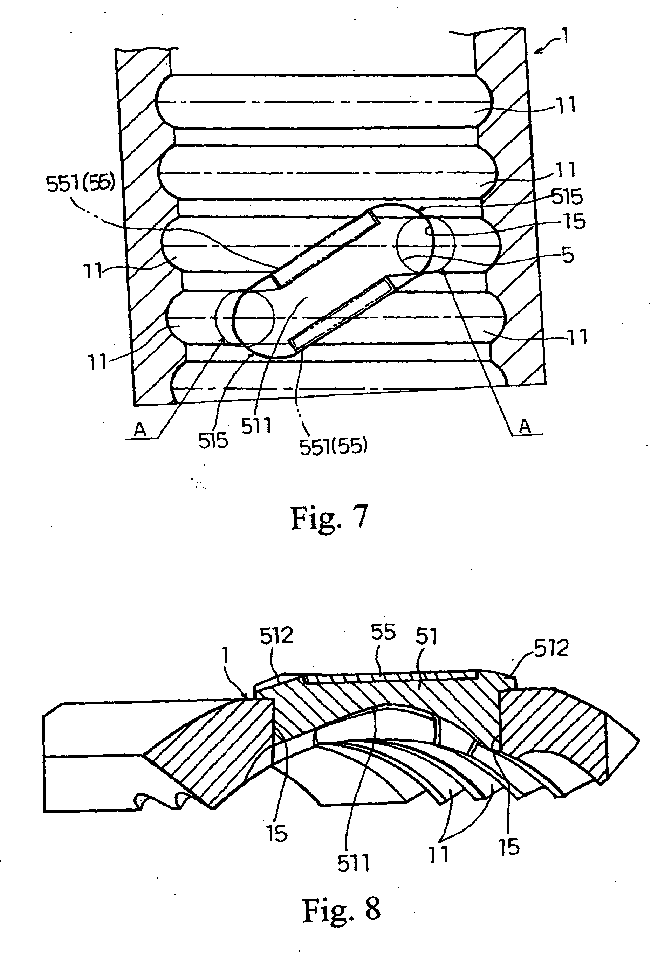

A manufacturing method of the above ball screw device will be described hereinafter. First, the deflector pieces 51 are attached to the nut 1 so that the prop portions 515 of each deflector piece 51 are inserted into the through hole 15 of the nut 1. The deflector pieces 51 are fixed to the nut 1 by the flanges 512 being caulked. Now, other fixing ways such as screws can be used for fixing the deflector pieces 151 in stead of the caulking. Next, the first thread groove 11 of the nut is ground by an internal thread grinding machine, for example. Then, a surface of the concavity 511 of each deflector piece 51 can be ground together with a surface of the first thread groove 11, because the guide members 55 are not attached to the nut 1 yet and the side portions 551 of each guide member 55, which interrupts the first thread groove 11, do not exist. Therefore, even if there is a step at seams between the first thread groove 11 and each deflector piece 51 (shown by A in Fig. 7), the step is removed by the grinding. After that, the guide members 55 are attached into the through holes 15 of the nut 1 so that the deflector piece 51 is sandwiched by the U-shaped guide member 55 (see Fig. 2). The attached guide members 55 are fixed to the deflector pieces 51 by caulking. Similar to fixing the deflector piece 51, other fixing ways such as screws can be used for fixing the guide members 55. At the end, the balls 3 are assembled to the nut 1 together with the screw shaft 2 so that the balls 3 are filled in each ball-roll path and each ball-return path with appropriate clearances. Then, the balls 3 and the screw shaft 2 can be assembled together by using a well-known ball insertion tool. However, it is possible that the balls 3 and the screw shaft 2 are also assembled without using such ball insertion tool. That is, the balls 3 are inserted through the through hole 15 at this way. To adopt this way, it is needed that the deflector piece 51 is fixed to the nut 1 temporarily and is detached from the nut 1 once after the grinding process. After that, the screw shaft 2 is inserted into the nut 1 and the balls 3 are inserted through the through hole 15 and, the deflector piece 51 and the guide member 55 are fixed to the nut 1 permanently. Further, not only the balls 3 but also separators can be inserted into the ball-roll path and the ball-return path. That is, the separator is arranged between the balls 3 respectively. The separators keep appropriate clearances between the balls 3 and help the balls 3 smoothly roll.

According to the aforementioned manufacturing method of the ball screw device, the balls 3 can be rolled smoothly, because the concavities 511 of the deflector pieces 51 are ground together with the first thread groove 11 and there is no step at the seam between the first thread groove 11 and each deflector piece 51.

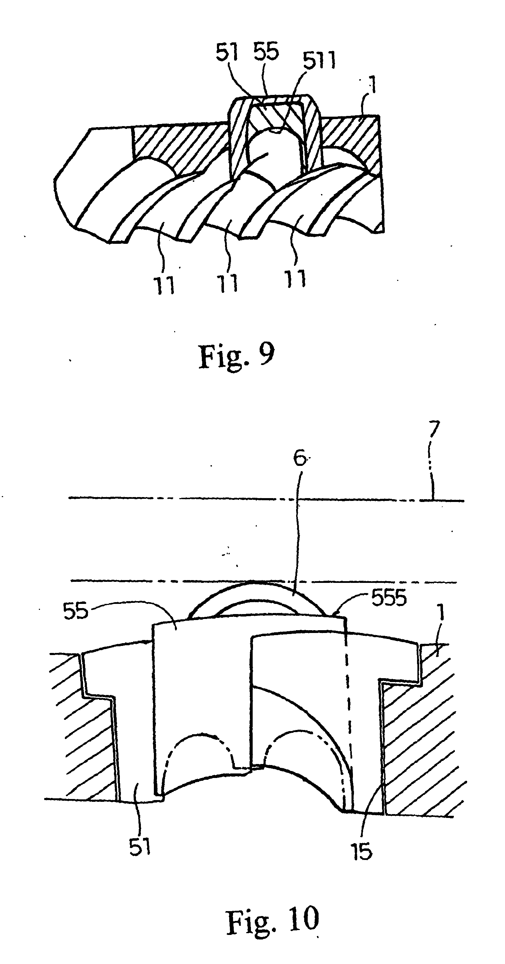

A modification of the embodiment to fix the deflector 5 to the nut 1 will be described with reference to Fig. 10. Since constitution of a ball screw device of this modification is the same with the aforementioned embodiment except the elastic members 6 and a nut housing 7 are used, only differences will be described. The elastic member 6 such as leaf spring or conical spring is previously attached on a top surface 555 of each guide member 55. After the guide members 55 are attached to the deflector pieces 51, the nut 1 is inserted (fitted) into the nut housing 7 that is a cylindrical-shape. Since the elastic members 6 contact with an inner surface of the nut housing 7, each guide member 55 and each deflector piece 51 are pushed toward the center of the nut 1. Therefore, the deflector pieces 51 and the guide members 55 are fixed to the nut 1 by elastic force of the elastic members 6. It is possible that the top portion 555 of the guide member 51 is formed as hemisphere-shaped or projection-shaped instead of attaching the leaf spring or conical spring. According to the aforementioned modification, even if the deflector 5 is two pieces, assembling process of the ball screw device does not become complicated.

Obviously, numerous modifications and variations of the present invention are possible in light of the above teachings. It is thereby to be understood that within the scope of the appended claims, the present invention may be practiced otherwise than as specifically described herein.

A ball screw mechanism comprises a nut, a screw shaft, plural balls and a deflector. The balls are arranged between a first thread groove which is formed on an i inner surface of the nut and a second thread groove which is formed on an outer surface of the screw shaft. The deflector comprises a deflector piece which defines a top plate of a ball-return path and a guide member which defines sidewalls of the ball-return path. The ball-return path returns the balls so as to circulate endlessly. As a manufacturing method of the ball screw device, the deflector piece is attached to the nut first. Next, the first thread groove is ground together with an inner surface of the deflector piece. After that, the guide member is attached to the nut. At last, the balls and the screw shaft are assembled to the nut.

## Claims

1. A ball screw device comprising:
a nut (1) with a first thread groove (11) formed on an inner surface thereof;
a screw shaft (2) with a second thread groove (21) formed on an outer surface thereof;
a plural number of balls (3) arranged between the first thread groove (11) and the second thread groove (21); and
a deflector (5) built into the nut to provide a ball-return path which returns the balls (3) so as to circulate endlessly, **characterized in that** the deflector (5) comprises a deflector piece (51) which defines a top plate of the ball-return path and a guide member (55) which defines sidewalls of the ball-return path, wherein:
the deflector piece (51) is shaped as an arch which comprises a pair of prop portions (515) and an intermediate portion;
the prop portions (515) are inserted into a through hole (15) formed into the nut (1); and a concavity (511) as the top plate of the ball-return path is formed on an inner surface of the intermediate portion.

2. A ball screw device according to claim 1, wherein the guide member (55) is shaped so that its cross section is an U-shaped having a pair of side portions (551) as the sidewalls of the ball-return path, which sandwich the intermediate portion of the deflector piece (51).

3. A ball screw device according to claim 1, wherein a plural number of the deflectors (5) are built into the nut (1) at an equal interval in circumferential direction.

4. A ball screw device according to claim 1, wherein the ball screw device further comprises a plural number of separators which is arranged between each ball (3).

5. A ball screw device according to claim 1, wherein the ball screw device further comprises a nut housing (7) where the nut (1) is inserted therein, and an elastic member (6) that is provided on an outer surface of the guide member (55); and the elastic member (6) is engaged with an inner surface of the nut housing (7) to fix the guide member (55) to the nut (1).

6. A manufacturing method of a ball screw device which comprises a nut (1), a screw shaft (2), a plural number of balls (3), and a deflector according to the deflector defined in claim 1 (5) which comprises two pieces, a deflector piece (51) and a guide member (55), the manufacturing method comprising the following steps in order:
attaching the deflector piece (51) to the nut (1);
grinding an inner surface of the nut (1) together with an inner surface of the deflector piece (51);
attaching the guide member (55) to the nut (1); and
assembling the balls (3) and the screw shaft (2) to the nut (1).

7. A manufacturing method of a ball screw device which comprises a nut (1), a screw shaft (2), a plural number of balls (3), and a deflector (5) according to the deflector defined in claim 1 which comprises two pieces, a deflector piece (51) and a guide member (55), the manufacturing method comprising the following steps in order:
attaching the deflector piece (51) to the nut (1);
grinding an inner surface of the nut (1) together with an inner surface of the deflector piece (51);
detaching the deflector piece (51) from the nut (1);
assembling the balls (3) and the screw shaft (2) to the nut (1); and
attaching the deflector piece (51) and the guide member (55) to the nut (1).

## Patentansprüche

1. Kugelgewindevorrichtung mit:
einer Mutter (1) mit einer ersten Gewindenut (11), die an ihrer Innenfläche ausgebildet ist;
einer Gewindewelle (2) mit einer zweiten Gewindenut (21), die an ihrer Außenfläche ausgebildet ist;
einer Mehrzahl von Kugeln (3), die zwischen der ersten Gewindenut (11) und der zweiten Gewindenut (21) angeordnet ist; und
einer Umlenkeinrichtung (5), die in die Nut eingebaut ist, um einen Kugelrücklaufweg vorzusehen, der die Kugeln (3) zurückführt, so dass diese endlos umlaufen,
**dadurch gekennzeichnet, dass**
die Umlenkeinrichtung (5) ein Umlenkstück (51), das eine obere Platte des Kugelrücklaufwegs definiert, und ein Führungsbauteil (55) aufweist, das Seitenwände des Kugelrücklaufwegs definiert, wobei:
das Umlenkstück (51) als ein Bogen geformt ist, der ein Paar Stützabschnitte (515) und einen Zwischenabschnitt aufweist;
wobei die Stützabschnitte (515) in ein Durchgangsloch (15), das in der Mutter (1) ausgebildet ist, eingeführt sind; und wobei eine Wölbung (511) als die obere Platte des Kugelrücklaufwegs an einer Innenfläche des Zwischenabschnitts ausgebildet ist.

2. Kugelgewindevorrichtung nach Anspruch 1, wobei das Führungsbauteil (55) derart geformt ist, dass sein Querschnitt U-förmig ist, der ein Paar Seitenabschnitte (551) als die Seitenwände des Kugelrücklaufwegs hat, zwischen denen der Zwischenabschnitt des Umlenkstücks (51) liegt.

3. Kugelgewindevorrichtung nach Anspruch 1, wobei eine Mehrzahl von Umlenkeinrichtungen (5) in die Mutter (1) in einem gleichen Abstand in einer Umfangsrichtung eingebaut ist.

4. Kugelgewindevorrichtung nach Anspruch 1, wobei die Kugelgewindevorrichtung ferner eine Mehrzahl von Trenneinrichtungen aufweist, die zwischen jeder Kugel (3) angeordnet ist.

5. Kugelgewindevorrichtung nach Anspruch 1, wobei die Kugelgewindevorrichtung ferner ein Muttergehäuse (7), in dem die Mutter (1) eingefügt ist, und ein elastisches Bauteil (6) aufweist, das an einer Außenfläche des Führungsbauteils (55) vorgesehen ist; und das elastische Bauteil (6) mit einer Innenfläche des Muttergehäuses (7) im Eingriff ist, um das Führungsbauteil (55) an der Mutter (1) zu befestigen.

6. Herstellungsverfahren einer Kugelgewindevorrichtung, die eine Mutter (1), eine Gewindewelle (2), eine Mehrzahl von Kugeln (3) und eine Umlenkeinrichtung (5) gemäß der in Anspruch 1 definierten Umlenkeinrichtung aufweist, welche zwei Stücke aufweist, ein Umlenkstück (51) und ein Führungsbauteil (55), wobei das Herstellungsverfahren der Reihe nach die folgenden Schritte aufweist:
Anbringen des Umlenkstücks (51) an der Mutter (1);
Schleifen einer Innenfläche der Mutter (1) zusammen mit einer Innenfläche des Umlenkstücks (51);
Anbringen des Führungsbauteils (55) an der Mutter (1); und
Zusammensetzen der Kugeln (3) und der Gewindewelle (2) mit der Mutter (1).

7. Herstellungsverfahren einer Kugelgewindevorrichtung, die eine Mutter (1), eine Gewindewelle (2), eine Mehrzahl von Kugeln (3) und eine Umlenkeinrichtung (5) gemäß der in Anspruch 1 definierten Umlenkeinrichtung aufweist, welche zwei Stücke aufweist, ein Umlenkstück (51) und ein Führungsbauteil (55), wobei das Herstellungsverfahren der Reihe nach die folgenden Schritte aufweist:
Anbringen des Umlenkstücks (51) an der Mutter (1);
Schleifen einer Innenfläche der Mutter (1) zusammen mit einer Innenfläche des Umlenkstücks (51);
Lösen des Unlenkstücks (51) von der Mutter (1);
Zusammensetzen der Kugeln (3) und der Gewindewelle (2) mit der Mutter (1); und
Anbringen des Umlenkstücks (51) und des Führungsbauteils (55) an der Mutter (1).

## Revendications

1. Vis à billes comportant:
un écrou (1) avec une première rainure de filet (11) formée sur une surface intérieure de celui-ci ;
un arbre de vis (12) avec une deuxième rainure de filet (21) formée sur une surface extérieure de celui-ci ;
une multiplicité de billes (3) disposées entre la première rainure de filet (11) et la deuxième rainure de filet (21) ; et
un déflecteur (5) intégré dans l'écrou afin de procurer un passage de retour de billes qui renvoie les billes (3) de façon à circuler sans fin, **caractérisée en ce que** le déflecteur (5) comprend une pièce de déflecteur (51) qui définit une plaque supérieure du passage de retour de billes et un élément de guidage (55) qui définit des parois latérales du passage de retour de billes,
la pièce de déflecteur (51) étant sous une forme d'arc qui comprend une paire de parties de support (515) et une partie intermédiaire ;
les parties de support (515) étant insérées dans un trou débouchant (15) formé dans l'écrou (1) ; et une concavité (511) comme plaque supérieure du passage de retour de billes étant formé sur une surface intérieure de la partie intermédiaire.

2. Vis à billes selon la revendication 1, dans laquelle l'élément de guidage (55) est conformé de telle sorte que sa section est en forme de U ayant une paire de parties latérales (551) en tant que parois latérales du passage de retour de billes, qui enserrent la partie intermédiaire de la pièce de déflecteur (51).

3. Vis à billes selon la revendication 1, dans laquelle une multiplicité de déflecteurs (5) est intégrée dans l'écrou (1) à un intervalle égal dans la direction circonférentielle.

4. Vis à billes selon la revendication 1, dans laquelle la vis à billes comporte en outre une multiplicité de séparateurs disposés entre chaque bille (3).

5. Vis à billes selon la revendication 1, dans laquelle la vis à billes comporte en outre un boîtier d'écrou (7) dans lequel est inséré l'écrou (1), et un élément élastique (6) qui est prévu sur une surface extérieure de l'élément de guidage (55) ; et l'élément élastique (6) est engagé avec une surface intérieure du boîtier d'écrou (7) afin de fixer l'élément de guidage (55) sur l'écrou (1).

6. Procédé de fabrication d'une vis à billes qui comprend un écrou (1), un arbre de vis (2), une multiplicité de billes (3), et un déflecteur (5) selon le déflecteur de la revendication 1 qui comprend deux pièces, une pièce de déflecteur (51) et un élément de guidage (55), le procédé de fabrication comportant les étapes suivantes dans l'ordre :
fixation de la pièce de déflecteur (51) sur l'écrou (1) ;
meulage d'une surface intérieure de l'écrou (1) avec une surface intérieure de la pièce de déflecteur (51) ;
fixation de l'élément de guidage (55) sur l'écrou (1) ; et
assemblage des billes (3) et de l'arbre de vis (2) sur l'écrou (1).

7. Procédé de fabrication d'une vis à billes qui comprend un écrou (1), un arbre de vis (2), une multiplicité de billes (3), et un déflecteur (5) selon le déflecteur de la revendication 1 qui comprend deux pièces, une pièce de déflecteur (51) et un élément de guidage (55), le procédé de fabrication comportant les étapes suivantes dans l'ordre :
fixation de la pièce de déflecteur (51) sur l'écrou (1) ;
meulage d'une surface intérieure de l'écrou (1) avec une surface intérieure de la pièce de déflecteur (51) ;
démontage de la pièce de déflecteur (51) de l'écrou (1) ;
assemblage des billes (3) et de l'arbre de vis (2) sur l'écrou (1) ; et
fixation de la pièce de déflecteur (51) et de l'élément de guidage (55) sur l'écrou (1).
